# EUROPÄISCHE PATENTSCHRIFT

(11) **EP 4 021 186 B1**
(45) Veröffentlichungstag und Bekanntmachung des Hinweises auf die Patenterteilung: **01.10.2025**
(21) Anmeldenummer: 20771426.2
(22) Anmeldetag: 28.08.2020
(51) Int. Cl.: A01N 37/44, C05F 11/00, C05G 5/23, A01P 21/00, A01N 37/46

(54) **BIOSTIMULANZMITTEL ZUR BEHANDLUNG VON PFLANZEN UND/ODER VON PFLANZENSAATGUT**
BIOSTIMULANT FOR THE TREATMENT OF PLANTS AND/OR PLANT SEEDS
BIOSTIMULANT POUR LE TRAITEMENT DES PLANTES ET / OU DES SEMENCES VÉGÉTALES

(30) Priorität: 31.08.2019 DE 102019123387
(43) Veröffentlichungstag der Anmeldung: 06.07.2022
(73) Patentinhaber: UniferX International GmbH, 18211 Ostseebad Nienhagen (DE)
(72) Erfinder: ALEXANDER, Alvin, 40237 Düsseldorf (DE)
(74) Vertreter: Andresen, Heiko
(86) Internationale Anmeldenummer: PCT/DE2020/100764
(87) Internationale Veröffentlichungsnummer: WO 2021/037314

(56) Entgegenhaltungen:
- EP-A1- 1 269 847
- EP-A1- 2 371 220
- WO-A2-02/102302
- DE-A1- 2 808 365
- GERALD BLUNDEN ET AL: "Enhanced leaf chlorophyll levels in plants treated with seaweed extract", JOURNAL OF APPLIED PHYCOLOGY., vol. 8, no. 6, 1 November 1996 (1996-11-01), NL, pages 535 - 543, XP055742777, ISSN: 0921-8971, DOI: 10.1007/BF02186333

## Beschreibung

### Gebiet der Erfindung

Die Erfindung betrifft ein Biostimulanzmittel zur Behandlung von Pflanzen und/oder von Pflanzensaatgut, welches einen Proteinhydrolysat-Anteil und einen Betain-Anteil aufweist.

Die Erfindung bezieht sich außerdem auf ein Verfahren zur Behandlung von Pflanzen und/oder von Pflanzensaatgut mit einem solchen Biostimulanzmittel.

Die Erfindung bezieht sich zudem auf die Verwendung einer Zusammensetzung mit einem Proteinhydrolysat-Anteil und einem Betain-Anteil als Biostimulanzmittel zur Behandlung von Pflanzen und/oder von Pflanzensaatgut.

### Stand der Technik

Aus der EP 2 371 220 A1 ist eine wässrige Lösung, die Silizium in einer bioverfügbaren Form enthält, bekannt. Aus der DE 28 08 365 A1 ist ein organisch-mineralischer Bodenstrukturverbesserer, aus der EP 1269 847 A1 eine Zusammensetzung zur Steigerung der pflanzlichen Abwehrreaktion und aus der WO 02/102302 A2 eine kosmetische Zusammensetzung bekannt. Gerald Blunden et al. (Journal of applied phycology 1996, Bd. 8, Nr. 6: 535-543) befasst sich mit der Behandlung von Pflanzen mit Seetangextrakt.

Biostimulanzmittel werden üblicherweise auf Pflanzen oder in der Rhizosphäre angewendet, um natürliche Prozesse zu stimulieren und auf diese Weise die Nährstoffaufnahme, die Nährstoffeffizienz, die Toleranz gegenüber abiotischem Stress und die Pflanzenqualität zu verbessern.

Aus der EP 2 735 232 A1 ist ein Biostimulanzmittel bekannt, das neben 79,3 bis 83,4% hydrolysiertem Algenprotein auch 2,0% bis 2,1% Betain enthält. Dieses Biostimulanzmittel zeigt jedoch unter Stressbedingungen wie z. B. Trockenstress kaum oder keine verbesserte Wirkung im Vergleich zu einem Standardprodukt. In der EP 2 735 232 A1 wird der Biostimulanzmischung daher zusätzlich Selen zugesetzt. Dieser Selenzusatz kann zu einer Verbesserung der Reaktion der Pflanzen bei Trockenstress führen, insbesondere zu einer verbesserten Fruchtproduktion der Pflanzen.

Der Einsatz von Selen ist jedoch mit einer Reihe von Nachteilen verbunden. Selen ist in geringsten Mengen zwar ein essentielles Spurenelement für den Menschen, bei einer Aufnahme über die notwendige Menge hinaus wirkt Selen jedoch toxisch. Dies ist problematisch, da sich gezeigt hat, dass durch die Pflanzenbehandlung mit der in der EP 2 735 232 A1 vorgeschlagenen Zusammensetzung der Selengehalt in dem essbaren Anteil der behandelten Pflanzen signifikant steigt. Auch auf Honigbienen und andere Insekten wirken höhere Selenkonzentrationen toxisch.

### Aufgabenstellung

Es ist daher eine Aufgabe der vorliegenden Erfindung, ein verbessertes Biostimulanzmittel bereitzustellen. Insbesondere ist es eine Aufgabe der vorliegenden Erfindung, ein Biostimulanzmittel mit verringerter Toxizität bereitzustellen.

### Darlegung der Erfindung

Diese Aufgabe wird in Verbindung mit den Merkmalen des Oberbegriffs von Anspruch 1 dadurch gelöst, dass der Proteinhydrolysat-Anteil und der Betain-Anteil zueinander in einem Massenverhältnis von 3:1 bis 1:10 in dem Biostimulanzmittel vorliegen, wobei
der Proteinhydrolysat-Anteil verschiedene freie Aminosäuren, Oligopeptide und Polypeptide enthält und wobei
der Betain-Anteil Glycinbetain umfasst.

Bevorzugte Ausführungsformen sind Gegenstand der abhängigen Ansprüche und der nachfolgenden Beschreibung.

Ein Verfahren zur Behandlung von Pflanzen und/oder von Pflanzensaatgut mit einem erfindungsgemäßen Biostimulanzmittel ist Gegenstand eines weiteren unabhängigen Anspruchs.

Ein weiterer unabhängiger Anspruch ist auf die Verwendung einer Zusammensetzung mit einem Proteinhydrolysat-Anteil und einem Betain-Anteil, wobei der Proteinhydrolysat-Anteil und der Betain-Anteil zueinander in einem Massenverhältnis von 3:1 bis 1:10 in der Zusammensetzung enthalten sind, wobei der Proteinhydrolysat-Anteil verschiedene freie Aminosäuren, Oligopeptide und Polypeptide enthält und wobei der Betain-Anteil Glycinbetain umfasst, als Biostimulanzmittel zur Behandlung von Pflanzen und/oder von Pflanzensaatgut, gerichtet.

Der Erfindung liegt die überraschende Erkenntnis zugrunde, dass der kombinierte Einsatz von einem Proteinhydrolysat und mindestens einer Betain-Verbindung in einem Biostimulanzmittel einen positiven synergistischen Effekt in Bezug auf Stressresistenz der mit diesem Mittel behandelten Pflanzen bzw. des behandelten Pflanzensaatguts hat, sofern der Proteinhydrolysat-Anteil und der Betain-Anteil im erfindungsgemäßen Verhältnis zueinander zum Einsatz kommen. Hierdurch weisen die mit dem erfindungsgemäßen Biostimulanzmittel behandelten Pflanzen bzw. die später aus dem behandelten Pflanzensaatgut entstehenden Pflanzen ein deutlich verbessertes Wachstum und einen höheren Ertrag auf. Die in den nachfolgenden Ausführungsbeispielen beschriebenen Versuche verdeutlichen diesen durch die vorliegende Erfindung erzeugten synergistischen Effekt.

Da allein bereits durch den Einsatz von Proteinhydrolysat und der mindestens einen Betain-Verbindung im erfindungsgemäßen Verhältnis zueinander die Stressresistenz des mit der Erfindung behandelten Pflanzensaatguts bzw. der behandelten Pflanzen signifikant verbessert wird, kann z. B. bei der Erfindung auf den aus dem Stand der Technik bekannten Selenzusatz verzichtet werden. In bevorzugten Ausführungsformen ist dementsprechend kein Selen in dem Biostimulanzmittel enthalten. Auf diese Weise können die toxischen Effekte des Selens auf Mensch und Umwelt vollständig vermieden werden.

In Bezug auf das erfindungsgemäße Massenverhältnis des Proteinhydrolysat-Anteils und des Betain-Anteils zueinander sind die jeweiligen Verhältnisangaben im Rahmen dieser Anmeldung so angegeben, dass der Proteinhydrolysat-Anteil dem Betain-Anteil vorangestellt ist. Dementsprechend bedeutet beispielsweise die Angabe "10:1" für das Massenverhältnis, dass der Massenanteil des Proteinhydrolysat-Anteils im Biostimulanzmittel im Vergleich zum Massenanteil des Betain-Anteils um den Faktor 10 größer ist.

In bevorzugten Ausführungsformen der Erfindung ist vorgesehen, dass der Proteinhydrolysat-Anteil und der Betain-Anteil zueinander in einem Massenverhältnis von 3:1 bis 1:5 oder von 1:1 bis 1:3 in dem Biostimulanzmittel vorliegen. Die Erfinder haben erkannt, dass innerhalb dieser Verhältnisse die kombinatorische Wirkung des Proteinhydrolysat-Anteils und des Betain-Anteils besonders ausgeprägt ist und das Biostimulanzmittel dementsprechend eine besonders gute Wirkung entfaltet.

So, wie der Begriff hier verwendet wird, ist ein "Proteinhydrolysat" ein Gemisch, welches unter anderem verschiedene freie Aminosäuren, Oligopeptide, Polypeptide und/oder weitere bei einer Proteinhydrolyse entstehende Produkte in beliebigen Kombinationen enthalten kann oder aus diesen Komponenten besteht. Geeignete Proteinhydrolysate sind z. B. durch teilweise oder vollständige enzymatische und/oder chemische Hydrolyse einer oder mehrerer Proteinquellen wie beispielsweise Gelatine erhältlich, wobei die Zusammensetzung des Proteinhydrolysates typischerweise in Abhängigkeit von dem Herstellungsverfahren und der Proteinquelle variieren kann. Natürlich kann der Proteinhydrolysat-Anteil auch die Produkte mehrerer unterschiedlicher Proteinhydrolysen enthalten.

Der Betain-Anteil kann eine einzelne Betain-Verbindung oder mehrere unterschiedliche Betain-Verbindungen enthalten oder aus diesen bestehen. In einer bevorzugten Ausführungsform ist vorgesehen, dass der Betain-Anteil Glycinbetain umfasst, d. h. wenigstens eine der im Biostimulanzmittel enthaltenden Betain-Verbindungen ist Glycinbetain. Es ist auch möglich, dass der Betain-Anteil aus Glycinbetain besteht, das Biostimulanzmittel also als einzige Betain-Verbindung Glycinbetain enthält.

Die Formulierung des erfindungsgemäßen Biostimulanzmittels zur Behandlung der Pflanzen und/oder des Pflanzensaatguts ist nicht sonderlich beschränkt. Das Biostimulanzmittel kann beispielsweise ein gasförmiges und/oder flüssiges und/oder festes, homogenes oder heterogenes Gemisch sein. Ein geeignetes heterogenes Gemisch ist dabei z. B. eine Emulsion, insbesondere in Form einer Paste, eine Suspension, ein Gemenge oder ein Aerosol. Ein homogenes Gemisch kann insbesondere ein Gasgemisch oder eine Lösung sein. Ein bevorzugtes Gemenge ist z. B. ein Granulat, insbesondere ein Pulver.

Formulierungen des Biostimulanzmittels, die einen oder mehrere Feststoffe enthalten, können zur Behandlung der Pflanzen z. B. dem Erdreich, in dem die Pflanzen wachsen, beigefügt bzw. untergemischt werden. Hierdurch kann das Biostimulanzmittel auf die Pflanzen wirken, die es aus der um die Wurzel herum befindlichen Rhizosphäre aufnehmen können.

Vorzugsweise liegt das Biostimulanzmittel in einer zumindest teilweise flüssigen Formulierung vor, insbesondere in Form eines flüssigen homogenen Gemisches. Auf diese Weise lässt sich das Mittel besonders einfach und gleichmäßig auf die Pflanzen, insbesondere auf die Blätter, bzw. das Pflanzensaatgut und/oder auf bzw. in das Erdreich applizieren. Gleichzeitig kann sich die Biostimulanzwirkung in der Regel deutlich schneller als bei einem Feststoff entfalten, sodass auch kurzfristige bzw. akute Einsätze des Mittels möglich sind. Sofern das Biostimulanzmittel einen oder mehrere Feststoffe enthält oder aus diesen besteht, ist es vorteilhaft, wenn es in einem Lösungsmittel löslich ist. Ein bevorzugtes Lösungsmittel für das Biostimulanzmittel ist Wasser bzw. eine wässrige Flüssigkeit.

In einer weiteren bevorzugten Ausführungsform der Erfindung ist vorgesehen, dass der Proteinhydrolysat-Anteil ein Hydrolyseprodukt von Kollagen umfasst oder daraus besteht. Für erfindungsgemäße Biostimulanzmittel mit Hydrolyseprodukten von Kollagen haben die Erfinder eine besonders vorteilhafte biostimulatorische Wirkung feststellen können. Ein weiterer Vorzug ist, dass Kollagen z. B. in tierischen Leder-, Haut- und Knochenresten enthalten ist und in großen Mengen als Abfallprodukt anfällt. Dadurch kann das Biostimulanzmittel auch besonders kostengünstig hergestellt werden.

Ganz allgemein ist es bei der vorliegenden Erfindung vorteilhaft, wenn der Proteinhydrolysat-Anteil zumindest teilweise oder vollständig ein Hydrolyseprodukt aus tierischem und/oder pflanzlichem Ursprung umfasst. Beispielsweise kann der Proteinhydrolysat-Anteil zumindest teilweise oder vollständig ein Hydrolyseprodukt aus der Hydrolyse von Tierresten, insbesondere Lederresten, wie z. B. Kuhlederresten, und/oder ein Hydrolyseprodukt aus der Hydrolyse von Hülsenfruchtproteinen sein. Bevorzugt enthält der Proteinhydrolysat-Anteil kein aus einer Alge stammendes Hydrolyseprodukt. Für die Herstellung des erfindungsgemäßen Biostimulanzmittels können z. B. Proteinhydrolysate zum Einsatz kommen, die 0,1 bis 60 Gewichtsprozent an freien Aminosäuren enthalten. Bei flüssigen Formulierungen kann der Anteil der freien Aminosäuren z. B. 0,1 bis 30 Gewichtsprozent in Bezug auf das Frischgewicht des Proteinhydrolysats betragen. Ein für die Herstellung bevorzugtes Proteinhydrolysat in Pulver- oder Granulatform kann z. B. 0,2 bis 60 Gewichtsprozent an freien Aminosäuren in Bezug auf die Trockenmasse enthalten. Die Proteinhydrolysate können einen Gesamtaminosäuregehalt von 40 bis 80 Gewichtsprozent, vorzugsweise von 50 bis 60 Gewichtsprozent, aufweisen.

In einer weiteren bevorzugten Ausführungsform der Erfindung enthält das Biostimulanzmittel zusätzlich wenigstens einen Hilfsstoff ausgewählt aus einem Fungizid, einem Insektizid und/oder einem Herbizid. Solche erfindungsgemäßen Kombinationen haben sich als besonders vorteilhaft erwiesen, da die Pflanzen bzw. das Pflanzensaatgut durch die hohe biostimulatorische Wirkung widerstandsfähiger gegenüber der durch den Hilfsstoff im Allgemeinen verursachten Stresswirkung sind und so z. B. eine negative Auswirkung von Herbizidstress auf die Pflanzen bzw. das Pflanzensaatgut abgeschwächt oder vermieden werden kann. Auf diese Weise ermöglicht das erfindungsgemäße Biostimulanzmittel eine besonders effektive und zudem besonders wirtschaftliche Pflanzenschutzbehandlung, da separate Arbeitsschritte zum Aufbringen des Hilfsstoffs auf die Pflanzen und/oder das Pflanzensaatgut entfallen.

Alternativ oder zusätzlich kann der Hilfsstoff auch einen pflanzenspezifischen Wachstumsregulator umfassen. Pflanzenspezifische Wachstumsregulatoren können z. B. Cytokine, Cytokinine, Ethen und/oder Phytohormone wie z. B. Abscisinsäure, Gibberelline und/oder Auxine sein. Dadurch wird mit dem erfindungsgemäßen Biostimulanzmittel ein besonders vorteilhaftes Pflanzenwachstum bzw. eine besonders vorteilhafte Saatgutentwicklung erreicht.

Eine weitere bevorzugte Ausführungsform der Erfindung sieht vor, dass das Biostimulanzmittel ein Lösungsmittel umfasst. Ein besonders bevorzugtes Lösungsmittel ist Wasser. Solche lösungsmittelhaltigen Biostimulanzmittel lassen sich besonders einfach und kontrolliert zur Behandlung der Pflanzen und/oder des Pflanzensaatguts einsetzen. Beispielsweise kann die Behandlung der Pflanzen bzw. des Pflanzensaatguts direkt mit einer routinemäßigen Bewässerung kombiniert werden, was die Anwendung des Biostimulanzmittels vereinfacht und Arbeitsschritte einspart. Darüber hinaus können die Pflanzen bzw. das Pflanzensaatgut ein lösungsmittelhaltiges Biostimulanzmittel in der Regel auch besser und schneller aufnehmen, sodass die bereits beschriebenen positiven Effekte der Erfindung, insbesondere die verbesserte Stressresistenz, bei den Pflanzen bzw. dem Pflanzensaatgut auch schneller und effektiver zur Wirkung kommen. Zudem kann z. B. über die Menge des Lösungsmittels die für den jeweiligen Einsatzzweck erforderliche Konzentration der wirksamen Komponenten des Biostimulanzmittels besonders einfach eingestellt und gleichmäßig dosiert werden.

In Ausführungsformen, in denen das Biostimulanzmittel ein Lösungsmittel enthält bzw. als Lösung vorliegt, bilden der Proteinhydrolysat-Anteil und der Betain-Anteil vorzugsweise zusammen einen Gesamtanteil von 0,01 Gewichtsprozent bis 80 Gewichtsprozent, bevorzugt 30 Gewichtsprozent bis 80 Gewichtsprozent, besonders bevorzugt 45 Gewichtsprozent bis 75 Gewichtsprozent des Biostimulanzmittels. Es ist auch möglich, dass der Proteinhydrolysat-Anteil und der Betain-Anteil zusammengenommen in einer Konzentration von 0,1 Gramm pro Liter bis 800 Gramm pro Liter, vorzugsweise 300 Gramm pro Liter bis 800 Gramm pro Liter, besonders bevorzugt 450 Gramm pro Liter bis 750 Gramm pro Liter in dem Biostimulanzmittel enthalten sind.

Ganz allgemein können bei der vorliegenden Erfindung der Proteinhydrolysat-Anteil und der Betain-Anteil zusammen einen Gesamtanteil von mindestens 0,01 Gewichtsprozent, mindestens 0,1 Gewichtsprozent, mindestens 0,5 Gewichtsprozent, mindestens 1 Gewichtsprozent, mindestens 2 Gewichtsprozent, mindestens 3 Gewichtsprozent, mindestens 4 Gewichtsprozent, mindestens 5 Gewichtsprozent, mindestens 6 Gewichtsprozent, mindestens 7 Gewichtsprozent, mindestens 8 Gewichtsprozent, mindestens 9 Gewichtsprozent, mindestens 10 Gewichtsprozent, mindestens 15 Gewichtsprozent, mindestens 20 Gewichtsprozent, mindestens 25 Gewichtsprozent, mindestens 30 Gewichtsprozent, mindestens 35 Gewichtsprozent, mindestens 40 Gewichtsprozent, mindestens 45 Gewichtsprozent, mindestens 50 Gewichtsprozent, mindestens 55 Gewichtsprozent, mindestens 60 Gewichtsprozent, mindestens 65 Gewichtsprozent, mindestens 70 Gewichtsprozent, mindestens 75 Gewichtsprozent, mindestens 80 Gewichtsprozent, mindestens 85 Gewichtsprozent, mindestens 90 Gewichtsprozent, mindestens 95 Gewichtsprozent, mindestens 98 Gewichtsprozent oder 100 Gewichtsprozent des Biostimulanzmittels bilden.

Alternativ oder zusätzlich können der Proteinhydrolysat-Anteil und der Betain-Anteil zusammen auch einen Gesamtanteil von maximal 0,01 Gewichtsprozent, maximal 0,1 Gewichtsprozent, maximal 0,5 Gewichtsprozent, maximal 1 Gewichtsprozent, maximal 2 Gewichtsprozent, maximal 3 Gewichtsprozent, maximal 4 Gewichtsprozent, maximal 5 Gewichtsprozent, maximal 6 Gewichtsprozent, maximal 7 Gewichtsprozent, maximal 8 Gewichtsprozent, maximal 9 Gewichtsprozent, maximal 10 Gewichtsprozent, maximal 15 Gewichtsprozent, maximal 20 Gewichtsprozent, maximal 25 Gewichtsprozent, maximal 30 Gewichtsprozent, maximal 35 Gewichtsprozent, maximal 40 Gewichtsprozent, maximal 45 Gewichtsprozent, maximal 50 Gewichtsprozent, maximal 55 Gewichtsprozent, maximal 60 Gewichtsprozent, maximal 65 Gewichtsprozent, maximal 70 Gewichtsprozent, maximal 75 Gewichtsprozent, maximal 80 Gewichtsprozent, maximal 85 Gewichtsprozent, maximal 90 Gewichtsprozent, maximal 95 Gewichtsprozent, maximal 98 Gewichtsprozent oder maximal 100 Gewichtsprozent des Biostimulanzmittels bilden.

In wiederum anderen bevorzugten Ausführungen können der Proteinhydrolysat-Anteil und der Betain-Anteil zusammen auch in einer Gesamtkonzentration von mindestens 0,1 Gramm pro Liter, mindestens 0,25 Gramm pro Liter, mindestens 0,5 Gramm pro Liter, mindestens 1 Gramm pro Liter, mindestens 5 Gramm pro Liter, mindestens 10 Gramm pro Liter, mindestens 20 Gramm pro Liter, mindestens 30 Gramm pro Liter, mindestens 40 Gramm pro Liter, mindestens 50 Gramm pro Liter, mindestens 60 Gramm pro Liter, mindestens 70 Gramm pro Liter, mindestens 80 Gramm pro Liter, mindestens 90 Gramm pro Liter, mindestens 100 Gramm pro Liter, mindestens 200 Gramm pro Liter, mindestens 300 Gramm pro Liter, mindestens 400 Gramm pro Liter, mindestens 500 Gramm pro Liter, mindestens 600 Gramm pro Liter, mindestens 700 Gramm pro Liter, mindestens 800 Gramm pro Liter, mindestens 900 Gramm pro Liter oder mindestens 1000 Gramm pro Liter in dem Biostimulanzmittel enthalten sein.

Zusätzlich oder alternativ können der Proteinhydrolysat-Anteil und der Betain-Anteil zusammen auch in einer Gesamtkonzentration von maximal 0,1 Gramm pro Liter, maximal 0,25 Gramm pro Liter, maximal 0,5 Gramm pro Liter, maximal 1 Gramm pro Liter, maximal 5 Gramm pro Liter, maximal 10 Gramm pro Liter, maximal 20 Gramm pro Liter, maximal 30 Gramm pro Liter, maximal 40 Gramm pro Liter, maximal 50 Gramm pro Liter, maximal 60 Gramm pro Liter, maximal 70 Gramm pro Liter, maximal 80 Gramm pro Liter, maximal 90 Gramm pro Liter, maximal 100 Gramm pro Liter, maximal 200 Gramm pro Liter, maximal 300 Gramm pro Liter, maximal 400 Gramm pro Liter, maximal 500 Gramm pro Liter, maximal 600 Gramm pro Liter, maximal 700 Gramm pro Liter, maximal 800 Gramm pro Liter, maximal 900 Gramm pro Liter oder maximal 1000 Gramm pro Liter in dem Biostimulanzmittel enthalten sein.

Bei einer weiteren bevorzugten Ausführungsform der Erfindung ist zudem vorgesehen, dass das Biostimulanzmittel zusätzlich ein Netzmittel enthält. Auf diese Weise wird eine verbesserte und insbesondere gleichmäßigere Benetzung der Pflanzen bzw. des Pflanzensaatguts mit dem Biostimulanzmittel erreicht und gleichzeitig die Absorbtionsrate erhöht, mit der das Biostimulanzmittel **z. B.** über die Pflanzenblätter in die Pflanzen aufgenommen wird.

Das Netzmittel kann insbesondere einen Netzmittelanteil von 0,01 Gewichtsprozent bis 5,0 Gewichtsprozent des Biostimulanzmittels bilden und/oder in einer Konzentration von 0,01 Volumenprozent bis 5,0 Volumenprozent in dem Biostimulanzmittel enthalten sein. Innerhalb dieser Bereiche lassen sich gute Benetzungseigenschaften und hohe Absorptionsraten des Biostimulanzmittels besonders vorteilhaft verbinden.

Das Netzmittel ist vorzugsweise ein nicht-ionisches Tensid. Besonders bevorzugt ist das Netzmittel ein Fettalkoholethoxylat, ein Fettaminethoxylat, ein Fettalkoholpropoxylat, ein Fettalkoholethoxypropoxylat oder eine beliebige Kombination davon. Diese Tenside sind von Vorteil, da sie sich durch eine geringe Schaumbildung auszeichnen und die durch das Proteinhydrolysat begünstigte Schaumbildung insbesondere bei Verdünnung des Biostimulanzmittels besonders wirksam unterbinden.

Vorzugsweise ist das Netzmittel in einem Netzmittelanteil von mindestens 0,01 Gewichtsprozent, mindestens 0,1 Gewichtsprozent, mindestens 0,5 Gewichtsprozent, mindestens 1,0 Gewichtsprozent, mindestens 2,0 Gewichtsprozent, mindestens 3,0 Gewichtsprozent, mindestens 4,0 Gewichtsprozent oder mindestens 5,0 Gewichtsprozent in dem Biostimulanzmittel enthalten.

Zusätzlich oder alternativ kann das Netzmittel auch einen Netzmittelanteil von maximal 0,01 Gewichtsprozent, maximal 0,1 Gewichtsprozent, maximal 0,5 Gewichtsprozent, maximal 1,0 Gewichtsprozent, maximal 2,0 Gewichtsprozent, maximal 3,0 Gewichtsprozent, maximal 4,0 Gewichtsprozent oder maximal 5,0 Gewichtsprozent in dem Biostimulanzmittel enthalten sein.

In anderen Ausführungsformen kann das Netzmittel in einer Konzentration von mindestens 0,01 Volumenprozent, mindestens 0,1 Volumenprozent, mindestens 0,5 Volumenprozent, mindestens 1,0 Volumenprozent, mindestens 2,0 Volumenprozent, mindestens 3,0 Volumenprozent, mindestens 4,0 Volumenprozent oder mindestens 5,0 Volumenprozent in dem Biostimulanzmittel enthalten sein.

Zusätzlich oder alternativ hierzu kann das Netzmittel auch in einer Konzentration von maximal 0,01 Volumenprozent, maximal 0,1 Volumenprozent, maximal 0,5 Volumenprozent, maximal 1,0 Volumenprozent, maximal 2,0 Volumenprozent, maximal 3,0 Volumenprozent, maximal 4,0 Volumenprozent oder maximal 5,0 Volumenprozent in dem Biostimulanzmittel enthalten sein.

Der pH-Wert des Biostimulanzmittels kann in bekannter Weise mit geeigneten Basen und/oder Säuren eingestellt werden. Bevorzugt enthält das Biostimulanzmittel zur Regulation des pH-Wertes Zitronensäure und/oder ein Salz davon wie z. B. Zitronensäure-Trinatriumsalz, insbesondere in einem Anteil von 1,0 bis 10 Gewichtsprozent oder 3,0 bis 5,0 Gewichtsprozent in Bezug auf die Gesamtmasse des Biostimulanzmittels.

Ein weiterer Aspekt der Erfindung betrifft ein Verfahren zur Behandlung von Pflanzen und/oder von Pflanzensaatgut, wobei die Behandlung mit dem erfindungsgemäßen Biostimulanzmittel erfolgt.

In einer bevorzugten Ausführungsform des Verfahrens umfasst die Behandlung ein Kontaktieren zumindest eines Teils der Pflanzen und/oder des Pflanzensaatguts mit dem Biostimulanzmittel. Vorzugsweise umfasst der Pflanzenteil ein Blatt oder mehrere Blätter der Pflanze. Das Biostimulanzmittel kann insbesondere mittels eines Sprühverfahrens, z. B. in Form einer Lösung, eines Aerosols, und/oder als Gasgemisch, auf den Pflanzenteil und/oder das Pflanzensaatgut aufgebracht werden.

Bei der Behandlung von Pflanzensaatgut wird dieses vorzugsweise vor dem Aussäen in das Biostimulanzmittel eingelegt und/oder von diesem umspült. Das Biostimulanzmittel kann hierzu wiederum in Form einer Lösung, eines Aerosols, bevorzugt in Form eines Nebels, und/oder als Gasgemisch vorliegen. In einer bevorzugten Verfahrensausführung wird das Pflanzensaatgut in einer belüfteten wässrigen Lösung mit einer Konzentration des Biostimulanzmittels zwischen 0,01 Gewichtsprozent und 5,0 Gewichtsprozent inkubiert. Auf diese Weise wird eine besonders effektive Keimungsförderung des Saatgutes unter Stressbedingungen wie z. B. Kältestress erreicht.

Bei einer weiteren bevorzugten Ausführungsform des erfindungsgemäßen Verfahrens ist vorgesehen, dass die Pflanzen und/oder das Pflanzensaatgut für mindestens 10 Stunden und/oder für maximal 14 Stunden mit der Biostimulanzmischung in Kontakt gebracht werden. Es hat sich gezeigt, dass bei diesen Kontaktdauern mit der Biostimulanzmischung die größten Verbesserungen in Bezug auf die Stressresistenz der Pflanzen bzw. des Pflanzesaatguts erzielt werden.

Eine vorteilhafte Wirkung der Biostimulanzmischung wird aber selbstverständlich auch bei kürzeren oder längeren Kontaktzeiten erreicht. In bestimmten Verfahrensausführungen werden die Pflanzen und/oder das Pflanzensaatgut für mindestens 1 Stunde, mindestens 2 Stunden, mindestens 3 Stunden, mindestens 4 Stunden, mindestens 5 Stunden, mindestens 6 Stunden, mindestens 7 Stunden, mindestens 8 Stunden, mindestens 9 Stunden, mindestens 10 Stunden, mindestens 11 Stunden, mindestens 12 Stunden, mindestens 13 Stunden, mindestens 14 Stunden, mindestens 15 Stunden, mindestens 16 Stunden, mindestens 17 Stunden, mindestens 18 Stunden, mindestens 19 Stunden, mindestens 20 Stunden, mindestens 24 Stunden, mindestens 36 Stunden, mindestens 48 Stunden oder mindestens 72 Stunden mit der Biostimulanzmischung in Kontakt gebracht.

Zusätzlich oder alternativ hierzu können die Pflanzen und/oder das Pflanzensaatgut für maximal 1 Stunde, maximal 2 Stunden, maximal 3 Stunden, maximal 4 Stunden, maximal 5 Stunden, maximal 6 Stunden, maximal 7 Stunden, maximal 8 Stunden, maximal 9 Stunden, maximal 10 Stunden, maximal 11 Stunden, maximal 12 Stunden, maximal 13 Stunden, maximal 14 Stunden, maximal 15 Stunden, maximal 16 Stunden, maximal 17 Stunden, maximal 18 Stunden, maximal 19 Stunden, maximal 20 Stunden, maximal 24 Stunden, maximal 36 Stunden, maximal 48 Stunden oder maximal 72 Stunden mit der Biostimulanzmischung in Kontakt gebracht werden.

In bevorzugten Ausführungsformen des Verfahrens ist es vorgesehen, dass die Behandlung mit dem Biostimulanzmittel vor einem Stressereignis für die Pflanzen und/oder das Pflanzensaatgut erfolgt. Dadurch wird bewirkt, dass sich die Stimulanzwirkung bis zum Eintritt des Stressereignisses zumindest teilweise oder vollständig entfalten kann und eine zuverlässige Verbesserung der Stressresistenz gewährleistet ist. Mit anderen Worten werden die Pflanzen bzw. das Pflanzensaatgut also auf ein geplantes und/oder erwartetes Stressereignis vorbereitet, indem im Vorfeld des Stressereignis bereits die Stressresistenz durch die Behandlung mit dem erfindungsgemäßen Biostimulanzmittel verbessert wird. Zusätzlich oder alternativ zur Behandlung vor einem Stressereignis kann die die Behandlung mit dem Biostimulanzmittel aber auch nach einem Stressereignis für die Pflanzen und/oder das Pflanzensaatgut erfolgen. Es hat sich überraschenderweise gezeigt, dass sich auch solche Pflanzen, die durch ein Stressereignis bereits geschädigt sind, durch die erfindungsgemäße Behandlung mit dem Biostimulanzmittel wieder weitgehend revitalisieren lassen. Auf diese Weise lassen sich Ernteausfälle auch z. B. noch nach einer unvorhergesehenen Hitze- bzw. Trockenperiode deutlich verringern.

Die Erfinder haben festgestellt, dass sich das erfindungsgemäße Verfahren zur Verbesserung der Toleranz der Pflanzen bzw. des Pflanzensaatguts gegenüber verschiedensten abiotischen und biotischen Stressereignissen eignet. Insbesondere kann das Stressereignis ein Kältestress, ein Hitzestress, ein Trockenstress und/oder ein Salzstress sein. Ein Kältestress kann insbesondere beinhalten, dass die Pflanzen bzw. das Pflanzensaatgut mehrere aufeinander folgende Tage einer Temperatur von unter 10 °C oder unter 8 °C ausgesetzt sind. Insbesondere können subtropische und tropische Pflanzen bereits bei Temperaturen unter 10 °C einem Kältestress ausgesetzt sein. Bei Hitzestress sind die Pflanzen z. B. über mehrere aufeinander folgende Tage einer Temperatur von über 30 °C ausgesetzt. Ganz allgemein sind Pflanzen einem Trockenstress ausgesetzt, sofern Ihnen zu wenig Wasser zur Verfügung steht. Gründe hierfür können z.B. Bodentrockenheit, Bodenfrost, osmotische Wasserbindung, oder zu geringe Ausdehnung des Wurzelsystems sein. Ein Beispiel für Trockenstress ist eine Bodenfeuchte von weniger als 50% oder weniger als 30% der nutzbaren Feldkapazität (%nFK).

Das Stressereignis kann auch eine Herbizid-, Fungizid- und/oder Insektizid-Behandlung sein, welche in der Regel ebenfalls mit Stress für die Pflanze verbunden sind. Insbesondere verursachen Herbizidanwendungen zum Teil erheblichen Stress für die Nutzpflanze, sodass selbst selektive Herbizide die Produktivität der Pflanzen reduzieren können. Beispielsweise führt in der Regel auch die Anwendung selektiver Zuckerrübenherbizide bereits zu einer deutlichen Reduzierung des Zuckerertrags. Diesen Stressauswirkungen wirkt das erfindungsgemäße Verfahren effektiv und zuverlässig entgegen.

Hierbei sind die Herbizid-, Fungizid- und/oder Insektizid-Behandlung Beispiele für ein planbares Stressereignis. Ein erwartetes Stressereignis kann z. B. mittels Wetterdaten, insbesondere mithilfe von Niederschlags- und/oder Temperaturvorhersagen prognostiziert werden. Die jeweiligen ein Stressereignis charakterisierenden Parameter, wie z. B. Temperaturverläufe, die Wasserrückhaltefähigkeit und/oder Salzkonzentration des Bodens, Niederschlagsverläufe, Luftfeuchtigkeitsverläufe und dergleichen sind dem Fachmann für die jeweiligen Pflanzenarten bzw. Pflanzensorten hinreichend bekannt.

In bevorzugten Ausführungsformen des erfindungsgemäßen Verfahrens wird die Behandlung zwischen 24 und 48 Stunden vor dem Stressereignis durchgeführt. Dies ist vorteilhaft, da hierdurch ausreichend Zeit für die Aufnahme sowie die Verstoffwechselung des Biostimulanzmittels durch die Pflanzen bzw. das Pflanzensaatgut zur Verfügung steht und führt demensprechend zu einer besonders ausgeprägten und zuverlässigen Verbesserung der Stressresistenz.

In weiteren vorteilhaften Verfahrensausführungen wird die Behandlung mindestens 1 Stunde, mindestens 2 Stunden, mindestens 3 Stunden, mindestens 4 Stunden, mindestens 5 Stunden, mindestens 6 Stunden, mindestens 7 Stunden, mindestens 8 Stunden, mindestens 9 Stunden, mindestens 10 Stunden, mindestens 11 Stunden, mindestens 12 Stunden, mindestens 13 Stunden, mindestens 14 Stunden, mindestens 15 Stunden, mindestens 16 Stunden, mindestens 17 Stunden, mindestens 18 Stunden, mindestens 19 Stunden, mindestens 20 Stunden, mindestens 24 Stunden, mindestens 36 Stunden, mindestens 48 Stunden oder mindestens 72 Stunden vor und/oder nach dem Stressereignis durchgeführt.

Zusätzlich oder alternativ hierzu kann die Behandlung maximal 1 Stunde, maximal 2 Stunden, maximal 3 Stunden, maximal 4 Stunden, maximal 5 Stunden, maximal 6 Stunden, maximal 7 Stunden, maximal 8 Stunden, maximal 9 Stunden, maximal 10 Stunden, maximal 11 Stunden, maximal 12 Stunden, maximal 13 Stunden, maximal 14 Stunden, maximal 15 Stunden, maximal 16 Stunden, maximal 17 Stunden, maximal 18 Stunden, maximal 19 Stunden, maximal 20 Stunden, maximal 24 Stunden, maximal 36 Stunden, maximal 48 Stunden oder maximal 72 Stunden vor und/oder nach dem Stressereignis durchgeführt werden.

Das erfindungsgemäße Verfahren kann grundsätzlich bei der Behandlung von allen bekannten Pflanzenarten bzw. Pflanzensorten und/oder deren Pflanzensaatgut zum Einsatz kommen, beispielsweise bei Ackerpflanzen, Gartenpflanzen, Zierpflanzen, Gräsern, Bäumen, Sträuchern und/oder Rasen. Vorzugsweise beinhaltet das erfindungsgemäße Verfahren die Behandlung einer oder mehrerer der folgenden Pflanzenarten bzw. Pflanzensorten und/oder deren Pflanzensaatgut: Getreide, Mais, Weizen, Gerste, Roggen, Reis, Sonnenblumen, Ölpflanzen, Raps, Sojabohnen, Baumwollpflanzen, Kartoffeln, Obst, Gemüse, Bohnen, Brokkoli, Kohl, Karotten, Blumenkohl, Gurken, Auberginen, Salat, Melonen, Wassermelonen, Zwiebeln, Erbsen, Gewürzpflanzen, Kräuter, Pfeffer, Spinat, Tomaten und/oder Tee.

Es versteht sich, dass mit dem erfindungsgemäßen Verfahren bzw. mit dem erfindungsgemäßen Biostimulanzmittel grundsätzlich eine Einzelpflanze behandelt werden kann. Solche Anwendungen sind insbesondere im Zierpflanzenbereich vorgesehen. Bevorzugt wird das Verfahren bzw. das Biostimulanzmittel aber auf eine Vielzahl von Pflanzen angewendet und insbesondere im landwirtschaftlichen Großmaßstab eingesetzt. In bevorzugten Verfahrensausführungen wird das Biostimulanzmittel so angewendet, dass die Masse des Proteinhydrolysat-Anteils und die Masse des Betain-Anteils zusammen 1 Gramm bis 5000 Gramm pro Hektar einer die Pflanzen und/oder das Pflanzensaatgut aufweisenden Behandlungsfläche beträgt. Vorzugsweise wird das Biostimulanzmittel, insbesondere bei Blattapplikation, in einem Volumen von 50 bis 1500 Litern pro Hektar aufgebracht. Für die Behandlung von Pflanzensaatgut wird bevorzugt ein erfindungsgemäßes Biostimulanzmittel eingesetzt, in dem der Proteinhydrolysat-Anteil und der Betain-Anteil zusammen in einer Gesamtkonzentration von 20 Gramm pro Liter bis 50 Gramm pro Liter enthalten sind. Zusätzlich oder alternativ hierzu können z. B. 100 Milliliter bis 200 Milliliter des Biostimulanzmittels pro 100 Kilogramm Saatgut zum Einsatz kommen. Das Saatgut kann hierbei z. B. ein Getreidesaatgut sein. Innerhalb dieser Bereiche haben die Erfinder einen besonders vorteilhaften Zusammenhang zwischen der verabreichten Dosis des Biostimulanzmittels und der daraus resultierenden Wirkung auf die Pflanzen bzw. das Saatgut feststellen können, sodass das Verfahren besonders effizient ist. Die Behandlungsfläche kann dabei z. B. eine landwirtschaftliche Fläche wie z. B. ein Feld sein, auf dem die Pflanzen, beispielsweise in einer Monokultur, wachsen.

Ganz grundsätzlich kann das Biostimulanzmittel in einem Volumen von mindestens 0,001 Milliliter, mindestens 0,01 Milliliter, mindestens 0,1 Milliliter, mindestens 1 Milliliter, mindestens 0,01 Liter, mindestens 0,1 Liter, mindestens 0,5 Liter, mindestens 1 Liter, mindestens 5 Liter, mindestens 10 Liter, mindestens 25 Liter, mindestens 50 Liter, mindestens 100 Liter, mindestens 200 Liter, mindestens 300 Liter, mindestens 400 Liter, mindestens 500 Liter, mindestens 750 Liter, mindestens 1000 Liter, mindestens 1500 Liter, mindestens 2000 Liter, mindestens 2500 Liter, mindestens 3000 Liter, mindestens 4000 Liter oder mindestens 5000 Liter für die Behandlung der Pflanzen bzw. des Pflanzensaatguts eingesetzt werden. Hierbei können diese Volumenangaben z. B. pro Hektar einer die Pflanzen und/oder das Pflanzensaatgut aufweisenden Behandlungsfläche und/oder pro 100 Kilogramm des zu behandelnden Saatguts bzw. der zu behandelnden Pflanzen und/oder - z. B. im Zierpflanzenbereich - pro zu behandelnder Einzelpflanze gelten.

Zusätzlich oder alternativ hierzu kann das Biostimulanzmittel in einem Volumen von maximal 0,001 Milliliter, maximal 0,01 Milliliter, maximal 0,1 Milliliter, maximal 1 Milliliter, maximal 0,01 Liter, maximal 0,1 Liter, maximal 0,5 Liter, maximal 1 Liter, maximal 5 Liter, maximal 10 Liter, maximal 25 Liter, maximal 50 Liter, maximal 100 Liter, maximal 200 Liter, maximal 300 Liter, maximal 400 Liter, maximal 500 Liter, maximal 750 Liter, maximal 1000 Liter, maximal 1500 Liter, maximal 2000 Liter, maximal 2500 Liter, maximal 3000 Liter, maximal 4000 Liter oder maximal 5000 Liter für die Behandlung der Pflanzen bzw. des Pflanzensaatguts eingesetzt werden. Auch hierbei können diese Volumenangaben z. B. pro Hektar einer die Pflanzen und/oder das Pflanzensaatgut aufweisenden Behandlungsfläche und/oder pro 100 Kilogramm des zu behandelnden Saatguts bzw. der zu behandelnden Pflanzen und/oder - z. B. im Zierpflanzenbereich - pro zu behandelnder Einzelpflanze gelten.

Schließlich betrifft die Erfindung eine Verwendung einer Zusammensetzung mit einem Proteinhydrolysat-Anteil und einem Betain-Anteil, wobei der Proteinhydrolysat-Anteil und der Betain-Anteil zueinander in einem Massenverhältnis von 3:1 bis 1:10 in der Zusammensetzung enthalten sind, wobei der Proteinhydrolysat-Anteil verschiedene freie Aminosäuren, Oligopeptide und Polypeptide enthält und wobei der Betain-Anteil Glycinbetain umfasst, als Biostimulanzmittel zur Behandlung von Pflanzen und/oder von Pflanzensaatgut.

Die Erläuterungen und Offenbarungen in Bezug auf einen erfindungsgemäßen Gegenstand gelten sinngemäß auch für alle weiteren erfindungsgemäßen Gegenstände, sofern diese nicht im Widerspruch zu den speziellen Erläuterungen und Offenbarungen der weiteren erfindungsgemäßen Gegenstände stehen. Beispielsweise gelten die Erläuterungen und Offenbarungen in Bezug auf das erfindungsgemäße Biostimulanzmittel sinngemäß auch für das erfindungsgemäße Verfahren bzw. die erfindungsgemäße Verwendung und umgekehrt, sofern diese nicht im Widerspruch zu den jeweils im Zusammenhang mit dem erfindungsgemäßen Verfahren, der erfindungsgemäßen Verwendung bzw. dem erfindungsgemäßen Biostimulanzmittel gemachten speziellen Erläuterungen und Offenbarungen stehen.

Weitere Merkmale und Vorteile der Erfindung ergeben sich aus der nachfolgenden speziellen Beschreibung und den Zeichnungen.

### Kurze Beschreibung der Figuren

Es zeigen:
Fig. 1:
   Ein Säulendiagramm mit dem Ergebnis eines ersten mit dem erfindungsgemäßen Biostimulanzmittel durchgeführten Vergleichsversuchs.
Fig. 2:
   Ein Säulendiagramm mit dem Ergebnis eines zweiten mit dem erfindungsgemäßen Biostimulanzmittel durchgeführten Vergleichsversuchs.
Fig. 3:
   Ein Säulendiagramm mit dem Ergebnis eines dritten mit dem erfindungsgemäßen Biostimulanzmittel durchgeführten Vergleichsversuchs.
Fig. 4:
   Ein Säulendiagramm mit dem Ergebnis eines vierten mit dem erfindungsgemäßen Biostimulanzmittel durchgeführten Vergleichsversuchs.
Fig. 5:
   Ein Säulendiagramm mit dem Ergebnis eines fünften mit dem erfindungsgemäßen Biostimulanzmittel durchgeführten Vergleichsversuchs.

### Beschreibung bevorzugter Ausführungsformen

Nachfolgend wird die Erfindung anhand von Ausführungsbeispielen und experimentellen Ergebnissen näher beschrieben. Diese Ausführungsbeispiele dienen der Erläuterung und nicht der Beschränkung auf spezifische Details.

### Vergleichsversuch 1: Wirkung des erfindungsgemäßen Biostimulanzmittels im Vergleich zu den Einzelkomponenten auf Maispflanzen bei hoher Temperaturbelastung unter Feldbedingungen

In einem ersten Feldversuch wurde die Wirkung des erfindungsgemäßen Biostimulanzmittels auf den Zuwachs der Blattfläche des Mais-Hybrids DKC 3511 unter Hitzestress untersucht. Zum Vergleich wurde parallel die entsprechende Wirkung der Einzelkomponenten Proteinhydrolysat und Betain in jeweils denselben in dem Biostimulanzmittel enthaltenen Mengen getestet.

Der Feldversuch wurde im Juni 2019 auf Böden mit spröder Schwarzerde durchgeführt. Der Humusgehalt betrug 3,2-3,4% und die Tiefe der Humusschicht lag bei 60-70 cm. Der pH-Wert des Bodens betrug 6,2-6,6. Der Gehalt an alkalischem hydrolysiertem Stickstoff lag bei 98-110 Gramm pro Kilogramm, der Gehalt an verfügbaren Phosphorverbindungen bei 110-115 Gramm pro Kilogramm und der verfügbare Kaliumgehalt bei 120-130 Gramm pro Kilogramm. Die durchschnittliche jährliche Niederschlagsmenge betrug 633 Millimeter, wobei der Niederschlag im Juni bei 87 Millimetern lag. Die durchschnittliche Jahrestemperatur betrug 7,4 °C, die durchschnittliche Temperatur im Juni 17,6 °C, die durchschnittliche relative Luftfeuchtigkeit 76% und die durchschnittliche relative Luftfeuchtigkeit im Juni 66%.

Während der Dauer des Feldversuches wurden die behandelten Pflanzen einem Hitzestress mit täglichen Temperaturen von über 30 °C ausgesetzt.

Zur Herstellung des erfindungsgemäßen Biostimulanzmittels wurde als Proteinhydrolysat ein flüssiges Kollagenhydrolysat mit einem Anteil an freien Aminosäuren von etwa 15% bei einem Gesamtaminosäuregehalt von etwa 50% verwendet. Ein geeignetes Hydrolysat ist z. B. unter der Bezeichnung Protifert LMW 8 von der Firma SICIT (Arzignano, Italien) erhältlich. Für den Betain-Anteil wurde ein Glycinbetain eingesetzt, das z. B. als Glycinbetain-HCl (Betainhydrochlorid) kommerziell von der Firma Evonik Industries AG (Essen, Deutschland) erhältlich ist. Aus Kollagenhydrolysat und Glycinbetain wurde anschließend ein flüssiges Gemisch mit einem pH-Wert von 6,5 hergestellt, bei dem der Proteinhydrolysat-Anteil und der Betain-Anteil zueinander in einem erfindungsgemäßen Massenverhältnis von 1:1 vorlagen. Das so hergestellte Biostimulanzmittel wurde zur Behandlung einer ersten Pflanzengruppe auf dem Versuchsfeld eingesetzt.

Zu Vergleichszwecken wurden zwei weitere auf dem Versuchsfeld befindliche Pflanzengruppen unter denselben Versuchsbedingungen entweder nur mit dem Kollagenhydrolysat oder nur mit dem Glycinbetain behandelt, wobei die Menge und Konzentration des Kollagenhydrolysates und des Glycinbetains in den Vergleichsversuchen jeweils derjenigen des erfindungsgemäßen Biostimulanzmittels entsprach.

Alle drei Pflanzengruppen wurden zu gleichen Zeitpunkten und mit den gleichen Mengen einmalig mit der entsprechenden Lösung behandelt. Dabei wurden bei der erfindungsgemäßen Behandlung pro Hektar Fläche umgerechnet 1,15 Liter flüssiges Proteinhydrolysat und 0,68 Kilogramm Glycinbetain, entsprechend einem Massenverhältnis von 1:1, auf die Pflanzen mittels eines Sprühverfahrens gleichmäßig aufgebracht. In entsprechender Weise wurden in den Vergleichsbehandlungen entweder nur jeweils 1,15 Liter flüssiges Proteinhydrolysat pro Hektar Feldfläche oder nur jeweils 0,68 Kilogramm Glycinbetain pro Hektar Feldfläche aufgebracht.

Zur Bestimmung der biologischen Wirkung der verschiedenen Behandlungen wurde die Blattflächen der Pflanzen (Summe der Blattfläche vom dritten bis zum sechsten Blatt von oben in Quadratmetern pro Hektar Feldfläche) jeweils vor Beginn der Behandlungen und 10 Tage nach der Behandlung bestimmt. Die biologische Wirkung entspricht dabei dem ermittelten Zuwachs der Blattfläche am Ende des Untersuchungszeitraums in Prozent.

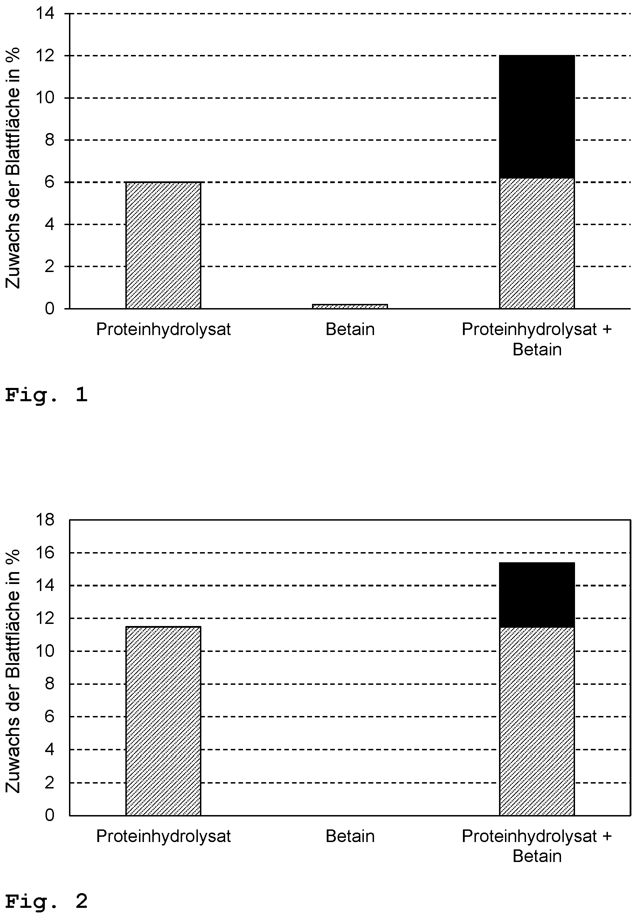

Figur 1 zeigt die Ergebnisse dieses Vergleichsversuches anhand der biologischen Wirkung in Prozent (y-Achse) in Abhängigkeit von der jeweiligen Behandlung der Pflanzen (x-Achse).

Die Referenzbehandlung nur mit Proteinhydrolysat führte zu einem Zuwachs der Blattfläche von 6% und die Referenzbehandlung nur mit Betain zu einem Zuwachs der Blattfläche von 0,2%. Dementsprechend wäre für die kombinierte Anwendung von Proteinhydrolysat und Betain zu erwarten gewesen, dass sich die Einzelwirkungen der beiden Behandlungen zu einem Gesamtzuwachs der Blattfläche von 6,2% addieren würden.

Tatsächlich wurde mit der erfindungsgemäßen Kombination von Proteinhydrolysat und Betain aber ein um 5,8% höherer Zuwachs der Blattfläche (in Figur 1 durch den schwarzen Teil der Säule gekennzeichnet) von insgesamt 12,0% erreicht. Dies entspricht im Verhältnis zu den aggregierten Einzelwirkungen einer Steigerung der biologischen Wirkung von mehr als 90%.

Ein derartiger superadditiver bzw. synergistischer Effekt des erfindungsgemäßen Biostimulanzmittels und der damit verbundene Mehrwert der Erfindung für die Leistungsfähigkeit und Wirtschaftlichkeit von Verfahren zur Behandlung von Pflanzen- bzw. Saatgut ist aus fachmännischer Sicht nicht zu erwarten gewesen.

### Vergleichsversuch 2: Wirkung des erfindungsgemäßen Biostimulanzmittels im Vergleich zu den Einzelkomponenten auf Sonnenblumen bei hoher Temperaturbelastung unter Feldbedingungen

Da bekannt ist, dass die biostimulatorische Wirkung je nach Pflanzenart variieren kann, wurde in einem weiteren Feldversuch die Wirkung des erfindungsgemäßen Biostimulanzmittels auf den Zuwachs der Blattfläche des Sonnenblumen-Hybrids SI Diamantis (Syngenta, Basel, Schweiz) unter Hitzestress mit täglichen Temperaturen von über 30 °C untersucht. Im Übrigen entsprechen die Versuchsbedingungen denen aus dem Vergleichsversuch 1.

Die Ergebnisse dieses Vergleichsversuches sind in Figur 2 anhand der biologischen Wirkung in % (y-Achse) in Abhängigkeit von der jeweiligen Behandlung der Pflanzen (x-Achse) gezeigt. Die Referenzbehandlung nur mit Proteinhydrolysat führte hier zu einem Zuwachs der Blattfläche von 11,48%. Bei der Referenzbehandlung nur mit Betain wurde unter dem Hitzestress überhaupt kein Zuwachs der Blattfläche beobachtet. Die Behandlung der Pflanzen mit dem erfindungsgemäßen Biostimulanzmittel führte dagegen zu einem Zuwachs der Blattfläche von 15,38% und lag somit 3,9% über der Summe der Einzelwirkungen (in Figur 2 durch den schwarzen Teil der Säule gekennzeichnet). Dies entspricht im Verhältnis zu den aggregierten Einzelwirkungen einer Steigerung der biologischen Wirkung von mehr als 30%.

Diese Ergebnisse zeigen, dass der vorteilhafte synergistische Effekt des erfindungsgemäßen Biostimulanzmittels bei verschiedenen Pflanzenarten eintritt.

### Vergleichsversuch 3: Wirkung des erfindungsgemäßen Biostimulanzmittels im Vergleich zu den Einzelkomponenten auf Sojapflanzen bei hoher Temperaturbelastung unter Feldbedingungen

Schließlich wurde in einem weiteren Feldversuch die kombinatorische Wirkung des erfindungsgemäßen Biostimulanzmittels anhand des Zuwachses der Blattfläche von Sojabohnen var. Niagara (Syngenta, Basel, Schweiz) unter Hitzestress verifiziert. Die Versuchsbedingungen entsprechen wiederum denjenigen aus Vergleichsversuch 1, wobei die Gesamtblattfläche anhand des dritten bis sechsten Blattes von oben der Sojapflanzen bestimmt wurde.

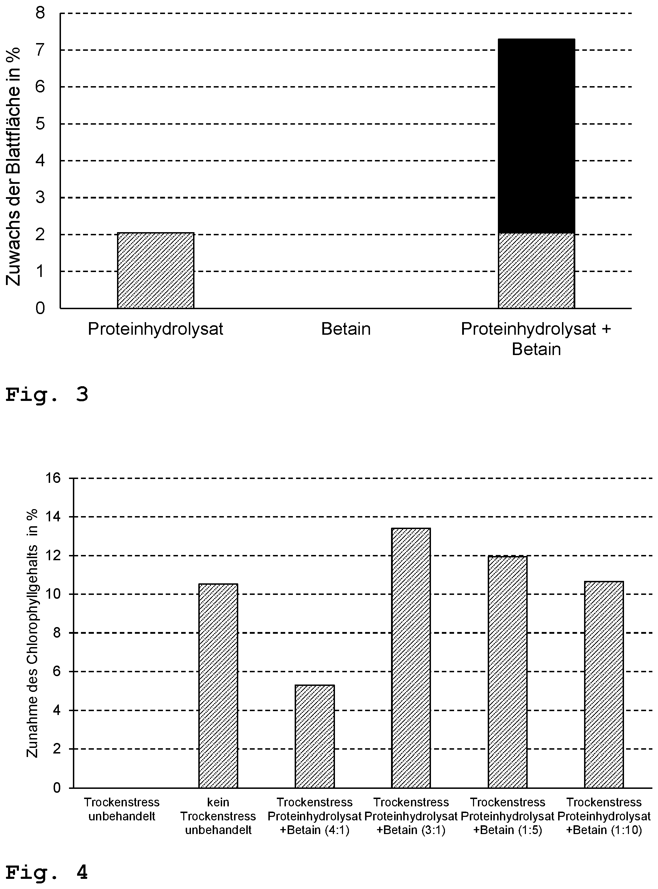

Figur 3 zeigt die Ergebnisse dieses Vergleichsversuches. In dem Säulendiagramm ist wiederum die biologische Wirkung in % (y-Achse) in Abhängigkeit von der jeweiligen Behandlung der Sojapflanzen (x-Achse) aufgetragen. Bei den Pflanzen, die nur mit Proteinhydrolysat behandelt wurden, wurde ein Zuwachs der Blattfläche von 2,05% beobachtet. Unter der Referenzbehandlung nur mit Betain konnte überhaupt kein Zuwachs der Blattfläche festgestellt werden. Diejenigen Pflanzen, die mit dem erfindungsgemäßen Biostimulanzmittel behandelt wurden, wiesen einen gegenüber den summierten Einzelwirkungen um 5,24% gesteigerten Zuwachs der Blattfläche (in Figur 2 durch den schwarzen Teil der Säule gekennzeichnet) von insgesamt 7,29% auf. Dies entspricht im Verhältnis zu den aggregierten Einzelwirkungen einer Steigerung der biologischen Wirkung von mehr als 200%.

Diese Ergebnisse belegen, dass sich der überraschende synergistische Wirkungseffekt der erfindungsgemäßen Kombination von Proteinhydrolysat und Betain auch vorteilhaft auf die Stressbehandlung von Sojabohnen auswirkt und verdeutlichen eine universelle Anwendbarkeit des erfindungsgemäßen Biostimulanzmittels zur Behandlung von Pflanzen und Saatgut.

### Vergleichsversuch 4: Wirkung des erfindungsgemäßen Biostimulanzmittels auf Maispflanzen bei Trockenstress unter Verwendung unterschiedlicher Massenverhältnisse von Proteinhydrolysat-Anteil und Betain-Anteil zueinander in Klimakammerversuchen

In Klimakammerversuchen wurde die Wirkung des erfindungsgemäßen Biostimulanzmittels unter Verwendung unterschiedlicher Massenverhältnisse des Protein-Hydrolysat-Anteils und des Betain-Anteils zueinander auf den Chlorophyllgehalt der ZEAMX Zea Mais-Variante DKC3730 bei Trockenstress untersucht. Zum Vergleich wurde parallel der Chlorophyllgehalt der unbehandelten - d. h. nicht mit dem erfindungsgemäßen Biostimulanzmittel behandelten - ZEAMX Zea Mais-Variante DKC3730 bei Trockenstress sowie ohne Induktion von Trockenstress getestet.

Die Klimakammerversuche wurden auf Böden aus sandiger Felderde durchgeführt. Der Humusgehalt des Bodens betrug 4,1%. Der pH-Wert des Bodes betrug 5,2. Der Boden wies jeweils pro 100 g einen Phosphorgehalt von 17 mg, einen Kaliumgehalt von 10 mg und einen Magnesiumgehalt von 8 mg auf. Der Wassergehalt wurde bis zur Induktion des Trockenstresses bei 70% der maximalen Wasserkapazität des Bodens aufrechterhalten. Die Bodentemperatur betrug über die gesamte Dauer der Versuche 20 °C.

Zur Herstellung des erfindungsgemäßen Biostimulanzmittels wurde als Proteinhydrolysat ein flüssiges Kollagenhydrolysat, das z. B. unter der Bezeichnung Protifert LMW 9 kommerziell von der Firma SICIT (Arzignano, Italien) erhältlich ist, verwendet. Für den Betain-Anteil wurde eine Betain-haltige Melasse aus Zuckerrüben, die z. B. kommerziell von der Firma AGRANA (Wien, Österreich) erhältlich ist, eingesetzt. Aus dem Kollagenhydrolysat und der Betain-haltigen Melasse aus Zuckerrüben wurden vier flüssige Gemische hergestellt, bei denen der Proteinhydrolysat-Anteil und der Betain-Anteil zueinander in einem Massenverhältnis von 4:1 (Vergleich), 3:1 (erfindungsgemäss), 1:5 (erfindungsgemäss) bzw. 1:10 (erfindungsgemäss) vorlag. Die so hergestellten drei erfindungsgemäßen Biostimulanzmittel und das Vergleichsmittel wurden jeweils zur Behandlung einer Pflanzengruppe in den Klimakammerversuchen eingesetzt. Auf jede der Pflanzengruppen wurde das jeweilige erfindungsgemäße Biotimulanzmittel bzw. das Vergleichsmittel dabei mittels eines Sprühverfahrens gleichmäßig aufgebracht.

Neben diesen mit den erfindungsgemäßen Biostimulanzmitteln bzw. dem Vergleichsmittel behandelten vier Pflanzengruppen wurden bei den Klimakammerversuchen zu Vergleichszwecken zwei weitere unbehandelte Pflanzengruppen eingesetzt.

Bei den vier mit den erfindungsgemäßen Biostimulanzmitteln bzw. dem Vergleichsmittel behandelten Pflanzengruppen sowie einer der beiden unbehandelten Pflanzengruppen wurde ein Trockenstress induziert, indem der Wassergehalt der jeweiligen Böden 4 Tage nach der Behandlung mit den erfindungsgemäßen Biostimulanzmitteln von 70% der maximalen Wasserkapazität auf 50% abgesenkt und auf diesem abgesenkten Niveau aufrechterhalten worden ist. Bei der weiteren unbehandelten Pflanzengruppe wurde der Wassergehalt des Bodens zu Vergleichszwecken hingegen bei 70% der maximalen Wasserkapazität belassen und somit kein Trockenstress induziert.

Bei den vier mit den erfindungsgemäßen Biostimulanzmitteln bzw. dem Vergleichsmittel behandelten Pflanzengruppen wurde 2 Tage nach der Induktion die Behandlung mit den jeweils zuvor bereits eingesetzten erfindungsgemäßen Biostimulanzmitteln bzw. dem Vergleichsmittel wiederholt.

Zur Bestimmung der biologischen Wirkung der verschiedenen Behandlungen wurde 14 Tage nach dieser zweiten Applikation der erfindungsgemäßen Biostimulanzmittel bzw. des Vergleichsmittels bei allen 6 Pflanzengruppen der Chlorophyllgehalt mittels eines SPAD-502-Meters bestimmt. Die biologische Wirkung entspricht dabei dem ermittelten Zuwachs des Chlorophyllgehalts am Ende des Untersuchungszeitraums bezogen auf die unbehandelte, dem Trockenstress ausgesetzte Vergleichspflanzengruppe in Prozent.

Figur 4 zeigt die Ergebnisse dieses Vergleichsversuchs anhand der biologischen Wirkung in Prozent (y-Achse) in Abhängigkeit von der jeweiligen Behandlung der Pflanzen (x-Achse).

Im Vergleich zur unbehandelten, dem Trockenstress ausgesetzte Pflanzengruppe zeigt die unbehandelte, keinem Trockenstress ausgesetzte Pflanzengruppe eine Zunahme des Chlorophyllgehalts von 10,52%. Die mit dem erfindungsgemäßen Biostimulanzmittel behandelten, dem Trockenstress ausgesetzten Pflanzengruppen zeigten ebenfalls alle eine Zunahme des Chlorophyllgehalts, nämlich 5,29% bei einem als Vergleich bereitgestellten Massenverhältnis von Proteinhydrolysat-Anteil und Betain-Anteil zueinander von 4:1, 13,4% bei einem erfindungsgemäßen Massenverhältnis von 3:1, 11,94% bei einem erfindungsgemäßen Massenverhältnis von 1:5 sowie 10,65% bei einem erfindungsgemäßen Massenverhältnis von 1:10.

Insbesondere bei den Pflanzengruppen, die mit den erfindungsgemäßen Biostimulanzmitteln in einem erfindungsgemäßen Massenverhältnis von Proteinhydrolysat-Anteil und Betain-Anteil von 3:1, 1:5 bzw. 1:10 behandelt wurden, entspricht die ermittelte Zunahme des Chlorophyllgehalts wenigstens dem der unbehandelten, keinem Trockenstress ausgesetzten Pflanzengruppe. Durch die Behandlung mit diesen erfindungsgemäßen Biostimulanzmitteln konnte somit der durch den Trockenstress auf die Pflanzen normalerweise ausgeübte negative Effekt auf den Chlorophyllgehalt vollständig kompensiert werden.

Der in Figur 4 zu sehende Vergleichsversuch zeigt, dass das erfindungsgemäße Biostimulanzmittel bei allen eingesetzten Massenverhältnissen von Proteinhydrolysat-Anteil und Betain-Anteil zueinander eine positive biologische Wirkung auf die Pflanzen bei Trockenstress entfaltet. Hierbei ist der vorteilhafte synergistische Effekt von Proteinhydrolysat und Betain besonders stark bei erfindungsgemäßen Massenverhältnissen von Proteinhydrolysat-Anteil und Betain-Anteil zueinander von 3:1 bis 1:10 bzw. 3:1 bis 1:5 ausgeprägt, was sich in einer überraschenden Verdoppelung der Zunahme des Chlorophyllgehalts gegenüber dem Massenverhältnis von 4:1 zeigte.

### Vergleichsversuch 5: Wirkung des erfindungsgemäßen Biostimulanzmittels auf Maispflanzen bei Trockenstress unter Verwendung unterschiedlicher Massenverhältnisse von Proteinhydrolysat-Anteil und Betain-Anteil zueinander in Klimakammerversuchen

In Vergleichsversuch 4 hat sich eine besonders positive biologische Wirkung auf die Pflanzen bei Trockenstress gezeigt, wenn in den eingesetzten erfindungsgemäßen Biostimulanzmitteln der Proteinhydrolysat-Anteil und Betain-Anteil zueinander in einem erfindungsgemäßen Massenverhältnis von maximal 3:1 vorlagen. Bei einem höheren Proteinhydrolysat-Anteil wie z. B. in dem Massenverhältnis von 4:1 ist zwar auch eine positive biologische Wirkung des erfindungsgemäßen Biostimulanzmittels feststellbar gewesen, die beobachtete Zunahme des Chlorophyllgehalts war jedoch im Vergleich zu einem Biostimulanzmittel mit einem höheren Betain-Anteil wie z. B. in dem erfindungsgemäßen Massenverhältnis von Proteinhydrolysat-Anteil und Betain-Anteil zueinander von 3:1 um etwa den Faktor 2,5 geringer.

In einem weiteren Klimakammerversuch wurde daher die biologische Wirkung dieser beiden erfindungsgemäßen Massenverhältnisse noch einmal miteinander verglichen. Hierzu wurden aus dem Kollagenhydrolysat und der Betain-haltigen Melasse aus Zuckerrüben zwei flüssige Gemische hergestellt, bei denen der Proteinhydrolysat-Anteil und der Betain-Anteil zueinander in einem Massenverhältnis von 4:1 (Vergleichsversuch) bzw. 3: (erfindungsgemäss) vorlagen. Die so hergestellten zwei erfindungsgemäßen Biostimulanzmittel wurden jeweils zur Behandlung einer Pflanzengruppe eingesetzt. Im Übrigen entsprechen alle Versuchsbedingungen einschließlich der Vergleichspflanzengruppen - mit Ausnahme des Zeitpunktes der finalen Chlorophyllgehaltsbestimmung - dem Vergleichsversuch 4. Die finale Chlorophyllgehaltbestimmung erfolgte in diesem Fall 21 Tage nach der zweiten Applikation auf die behandelten Pflanzengruppen mit den jeweiligen erfindungsgemäßen Biostimulanzmitteln.

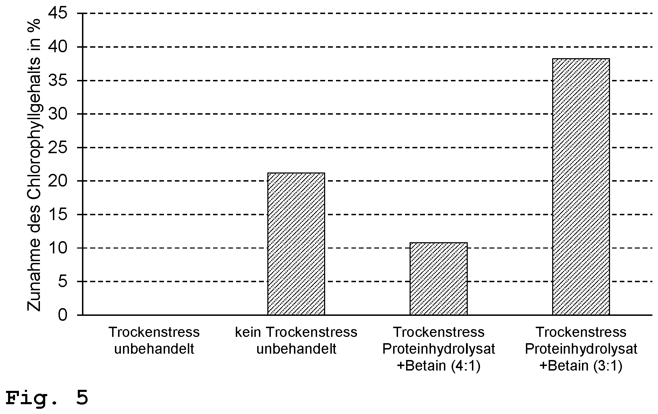

Die biologische Wirkung entspricht wiederum dem ermittelten Zuwachs des Chlorophyllgehalts am Ende des Untersuchungszeitraums bezogen auf die unbehandelte, dem Trockenstress ausgesetzte Vergleichspflanzengruppe in Prozent. Figur 5 zeigt die Ergebnisse dieses Vergleichsversuchs anhand der biologischen Wirkung in Prozent (y-Achse) in Abhängigkeit von der jeweiligen Behandlung der Pflanzen (x-Achse).

Im Vergleich zur unbehandelten, dem Trockenstress ausgesetzten Pflanzengruppe zeigt die unbehandelte, keinem Trockenstress ausgesetzte Pflanzengruppe eine Zunahme des Chlorophyllgehalts von 21,16%. Die mit dem erfindungsgemäßen Biostimulanzmittel behandelten, dem Trockenstress ausgesetzten Pflanzengruppen zeigten ebenfalls beide eine Zunahme des Chlorophyllgehalts. Diese war jedoch - wie bereits in Vergleichsversuch 4 - bei der Pflanzengruppe, die mit dem Biostimulanzmittel mit einem erfindungsgemäßen Massenverhältnis von Proteinhydrolysat-Anteil und Betain-Anteil zueinander von 3:1 behandelt worden ist, im Vergleich zu der mit dem Biostimulanzmittel mit einem Massenverhältnis von 4:1 behandelten Pflanzengruppe signifikant höher. Bei Einsatz von Proteinhydrolysat-Anteil und Betain-Anteil zueinander in einem erfindungsgemässen Massenverhältnis von 3:1 betrug die Zunahme des Chlorophyllgehalts 38,23% gegenüber 10,18% bei Einsatz eines Massenverhältnisses von 4:1. Dies entspricht einer zusätzlichen Verbesserung der beobachteten biologischen Wirkung um 375%. Ein derartige, sich ab einem erfindungsgemäßen Massenverhältnis von maximal 3:1 noch einmal zusätzlich einstellende Verbesserung der biologischen Wirkung ist aus fachmännischer Sicht nicht zu erwarten gewesen.

Natürlich stellen die in der speziellen Beschreibung diskutierten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

## Patentansprüche

1. Biostimulanzmittel zur Behandlung von Pflanzen und/oder von Pflanzensaatgut, welches einen Proteinhydrolysat-Anteil und einen Betain-Anteil aufweist,
**dadurch gekennzeichnet,**
**dass** der Proteinhydrolysat-Anteil und der Betain-Anteil zueinander in einem Massenverhältnis von 3:1 bis 1:10 in dem Biostimulanzmittel vorliegen, wobei
der Proteinhydrolysat-Anteil verschiedene freie Aminosäuren, Oligopeptide und Polypeptide enthält und wobei der Betain-Anteil Glycinbetain umfasst.

2. Biostimulanzmittel nach Anspruch 1,
**dadurch gekennzeichnet,**
**dass** der Proteinhydrolysat-Anteil und der Betain-Anteil zueinander in einem Massenverhältnis von 3:1 bis 1:5 in dem Biostimulanzmittel vorliegen.

3. Biostimulanzmittel nach Anspruch 1 bis 2,
**dadurch gekennzeichnet,**
**dass** der Proteinhydrolysat-Anteil und der Betain-Anteil zueinander in einem Massenverhältnis von 1:1 bis 1:3 in dem Biostimulanzmittel vorliegen.

4. Biostimulanzmittel nach Anspruch 1 bis 3,
**dadurch gekennzeichnet,**
**dass** der Proteinhydrolysat-Anteil zumindest teilweise ein Hydrolyseprodukt von Kollagen umfasst oder daraus besteht.

5. Biostimulanzmittel nach Anspruch 1 bis 4,
**dadurch gekennzeichnet,**
**dass** das Biostimulanzmittel zusätzlich wenigstens einen Hilfsstoff ausgewählt aus einem Fungizid, einem Insektizid, einem Herbizid und/oder einem pflanzenspezifischen Wachstumsregulator umfasst.

6. Biostimulanzmittel nach Anspruch 1 bis 5,
**dadurch gekennzeichnet,**
**dass** das Biostimulanzmittel ein Lösungsmittel umfasst.

7. Biostimulanzmittel nach Anspruch 1 bis 6,
**dadurch gekennzeichnet,**
**dass** der Proteinhydrolysat-Anteil und der Betain-Anteil zusammen einen Gesamtanteil von 0,01 Gewichtsprozent bis 10 Gewichtsprozent des Biostimulanzmittels bilden und/oder zusammen in einer Konzentration von 0,1 Gramm pro Liter bis 100 Gramm pro Liter in dem Biostimulanzmittel enthalten sind.

8. Biostimulanzmittel nach Anspruch 1 bis 7,
**dadurch gekennzeichnet,**
**dass** das Biostimulanzmittel zusätzlich ein Netzmittel umfasst, das einen Netzmittelanteil von 0,01 Gewichtsprozent bis 5 Gewichtsprozent des Biostimulanzmittels bildet und/oder in einer Konzentration von 0,01 Volumenprozent bis 5 Volumenprozent in dem Biostimulanzmittel enthalten ist.

9. Verfahren zur Behandlung von Pflanzen und/oder von Pflanzensaatgut,
**dadurch gekennzeichnet,**
**dass** die Behandlung mit einem Biostimulanzmittel nach einem der Ansprüche 1 bis 8 erfolgt.

10. Verfahren nach Anspruch 9,
**dadurch gekennzeichnet,**
**dass** die Behandlung ein Kontaktieren zumindest eines Teils der Pflanzen und/oder des Pflanzensaatguts mit dem Biostimulanzmittel umfasst.

11. Verfahren nach Anspruch 9 oder 10,
**dadurch gekennzeichnet,**
**dass** die Pflanzen und/oder das Pflanzensaatgut für mindestens 10 Stunden und/oder für maximal 14 Stunden mit der Biostimulanzmischung in Kontakt gebracht werden.

12. Verfahren nach Anspruch 9 bis 11,
**dadurch gekennzeichnet,**
**dass** die Behandlung vor einem Stressereignis für die Pflanzen und/oder das Pflanzensaatgut erfolgt.

13. Verfahren nach Anspruch 12,
**dadurch gekennzeichnet,**
**dass** das Stressereignis ein Kältestress, ein Hitzestress, ein Trockenstress, ein Salzstress und/oder eine Herbizid-, Fungizid- und/oder Insektizid-Behandlung ist.

14. Verwendung einer Zusammensetzung mit einem Proteinhydrolysat-Anteil und einem Betain-Anteil, wobei der Proteinhydrolysat-Anteil und der Betain-Anteil zueinander in einem Massenverhältnis von 3:1 bis 1:10 in der Zusammensetzung enthalten sind, wobei der Proteinhydrolysat-Anteil verschiedene freie Aminosäuren, Oligopeptide und Polypeptide enthält und wobei der Betain-Anteil Glycinbetain umfasst, als Biostimulanzmittel zur Behandlung von Pflanzen und/oder von Pflanzensaatgut.

## Claims

1. Biostimulant agent for treating plants and/or plant seed, comprising a protein hydrolysate proportion and a betaine proportion,
**characterized in that**
the protein hydrolysate proportion and the betaine proportion are present in relation to one another in a mass ratio of 3:1 to 1:10 in the biostimulant agent, wherein
the protein hydrolysate proportion contains various free amino acids, oligopeptides and polypeptides and wherein the betaine proportion comprises glycine betaine.

2. Biostimulant agent according to claim 1,
**characterized in that**
the protein hydrolysate proportion and the betaine proportion are present in relation to one another in a mass ratio of 3:1 to 1:5 in the biostimulant agent.

3. Biostimulant agent according to claims 1 to 2,
**characterized in that**
the protein hydrolysate proportion and the betaine proportion are present in relation to one another in a mass ratio of 1:1 to 1:3 in the biostimulant agent.

4. Biostimulant agent according to claims 1 to 3,
**characterized in that**
the protein hydrolysate proportion at least in part comprises or consists of a hydrolysis product of collagen.

5. Biostimulant agent according to claims 1 to 4,
**characterized in that**
the biostimulant agent additionally comprises at least one additive selected from a fungicide, an insecticide, a herbicide and/or a plant-specific growth regulator.

6. Biostimulant agent according to claims 1 to 5,
**characterized in that**
the biostimulant agent comprises a solvent.

7. Biostimulant agent according to claims 1 to 6,
**characterized in that**
the protein hydrolysate proportion and the betaine proportion form together a total proportion from 0.01 weight percent to 10 weight percent of the biostimulant agent and/or are contained together in a concentration from 0.1 gram per liter to 100 grams per liter in the biostimulant agent.

8. Biostimulant agent according to claims 1 to 7,
**characterized in that**
the biostimulant agent additionally comprises a wetting agent which forms a wetting agent proportion of 0.01 weight percent to 5 weight percent of the biostimulant agent and/or is contained in the biostimulant agent in a concentration of 0.01 volume percent to 5 volume percent.

9. Method for treating plants and/or plant seed,
**characterized in that**
the treatment is performed with a biostimulant agent according to one of the claims 1 to 8.

10. Method according to claim 9,
**characterized in that**
the treatment comprises contacting at least one part of the plants and/or the plant seeds with the biostimulant agent.

11. Method according to claim 9 or 10,
**characterized in that**
the plants and/or plant seed are brought into contact with the biostimulant mixture for at least 10 hours and/or for at most 14 hours.

12. Method according to claims 9 to 11,
**characterized in that**
the treatment is performed before a stress event for the plants and/or plant seed.

13. Method according to claim 12,
**characterized in that**
the stress event is a cold stress, a heat stress, a drought stress, a salt stress, and/or a herbicide, fungicide, and/or insecticide treatment.

14. Use of a composition comprising a protein hydrolysate proportion and a betaine proportion, wherein the protein hydrolysate proportion and the betaine proportion are contained in relation to one another in a mass ratio of 3:1 to 1:10 in the composition, wherein the protein hydrolysate proportion contains various free amino acids, oligopeptides and polypeptides and wherein the betaine proportion comprises glycine betaine, as biostimulant agent for treating plants and/or plant seed.

## Revendications

1. Agent biostimulant pour le traitement de plantes et/ou de semences de plantes, lequel agent biostimulant présente une fraction d'hydrolysat de protéines et une fraction de bétaïne,
**caractérisé en ce**
**que** la fraction d'hydrolysat de protéines et la fraction de bétaïne sont présentes l'une par rapport à l'autre dans un rapport massique allant de 3:1 à 1:10 dans l'agent biostimulant, dans lequel
la fraction d'hydrolysat de protéines contient différents acides aminés libres, oligopeptides et polypeptides, et dans lequel
la fraction de bétaïne comprend de la glycine-bétaïne.

2. Agent biostimulant selon la revendication 1,
**caractérisé en ce**
**que** la fraction d'hydrolysat de protéines et la fraction de bétaïne sont présentes l'une par rapport à l'autre dans un rapport massique allant de 3:1 à 1:5 dans l'agent biostimulant.

3. Agent biostimulant selon les revendications 1 à 2,
**caractérisé en ce**
**que** la fraction d'hydrolysat de protéines et la fraction de bétaïne sont présentes l'une par rapport à l'autre dans un rapport massique allant de 1:1 à 1:3 dans l'agent biostimulant.

4. Agent biostimulant selon les revendications 1 à 3,
**caractérisé en ce**
**que** la fraction d'hydrolysat de protéines comprend ou se compose au moins partiellement d'un produit d'hydrolyse du collagène.

5. Agent biostimulant selon les revendications 1 à 4,
**caractérisé en ce**
**que** l'agent biostimulant comprend en outre au moins une substance auxiliaire choisie parmi un fongicide, insecticide, herbicide et/ou régulateur de croissance spécifique aux plantes.

6. Agent biostimulant selon les revendications 1 à 5,
**caractérisé en ce**
**que** l'agent biostimulant comprend un solvant.

7. Agent biostimulant selon les revendications 1 à 6,
**caractérisé en ce**
**que** la fraction d'hydrolysat de protéines et la fraction de bétaïne forment ensemble une fraction totale allant de 0,01 pour cent en poids à 10 pour cent en poids de l'agent biostimulant et/ou sont contenues ensemble dans l'agent biostimulant à une concentration allant de 0,1 gramme par litre à 100 grammes par litre.

8. Agent biostimulant selon les revendications 1 à 7,
**caractérisé en ce**
**que** l'agent biostimulant comprend en outre un agent mouillant qui forme une fraction d'agent mouillant allant de 0,01 pour cent en poids à 5 pour cent en poids de l'agent biostimulant et/ou qui est contenu dans l'agent biostimulant à une concentration allant de 0,01 pour cent en volume à 5 pour cent en volume.

9. Procédé de traitement de plantes et/ou de semences de plantes,
**caractérisé en ce**
**que** le traitement est effectué avec un agent biostimulant selon l'une des revendications 1 à 8.

10. Procédé selon la revendication 9,
**caractérisé en ce**
**que** le traitement comprend une mise en contact d'au moins une partie des plantes et/ou des semences de plantes avec l'agent biostimulant.

11. Procédé selon la revendication 9 ou 10,
**caractérisé en ce**
**que** les plantes et/ou les semences de plantes sont mises en contact avec le mélange biostimulant pendant au moins 10 heures et/ou pendant au maximum 14 heures.

12. Procédé selon les revendications 9 à 11,
**caractérisé en ce**
**que** le traitement est effectué avant un évènement stressant pour les plantes et/ou les semences de plantes.

13. Procédé selon la revendication 12,
**caractérisé en ce**
**que** l'évènement stressant est un stress dû au froid, un stress dû à la chaleur, un stress dû à la sécheresse, un stress dû au sel et/ou un traitement herbicide, fongicide et/ou insecticide.

14. Utilisation d'une composition comportant une fraction d'hydrolysat de protéines et une fraction de bétaïne, dans laquelle la fraction d'hydrolysat de protéines et la fraction de bétaïne sont contenues l'une par rapport à l'autre dans un rapport massique allant de 3:1 à 1:10 dans la composition, dans laquelle la fraction d'hydrolysat de protéines contient différents acides aminés libres, oligopeptides et polypeptides, et dans laquelle la fraction de bétaïne comprend de la glycine-bétaïne, comme agent biostimulant pour le traitement de plantes et/ou de semences de plantes.
